# EUROPEAN PATENT APPLICATION

(11) **EP 4 394 925 A1**
(43) Date of publication of application: **03.07.2024**
(21) Application number: 22861092.9
(22) Date of filing: 03.08.2022
(51) Int. Cl.: H01M 4/14

(54) **PASTING PAPER FOR LEAD ACID STORAGE BATTERIES**

(30) Priority: 24.08.2021 JP 2021136337
(71) Applicant: ENTEK Asia Inc, Fuwa-gun, Gifu 5032121 (JP)
(72) Inventor: KATAGIRI, Yuji, Fuwa-gun, Gifu 503-2121 (JP); SUGIYAMA, Shoji, Fuwa-gun, Gifu 503-2121 (JP); KAWACHI, Masahiro, Fuwa-gun, Gifu 503-2121 (JP)
(74) Representative: Körfer, Thomas
(86) International application number: PCT/JP2022/029757
(87) International publication number: WO 2023/026801

(57) **Abstract**

[Problem] To provide a pasting paper that is composed of a nonwoven fabric using at least three types of fibers as constituent materials, and that, in a lead acid battery, has a function to prevent fall-off of an active material in assembling a battery, prevents electrolyte stratification occurring accompanying charging and discharging of the lead acid battery, and moreover inhibits a decrease in the charge acceptability of the lead acid battery by reducing the internal resistance value of the lead acid battery while maintaining prevention of fall-off of the active material and prevention of electrolyte stratification against a decrease in battery performance caused by a change in the size of the active material with repeated battery cycles.

[Means for Resolution] A pasting paper for lead acid batteries composed of a nonwoven fabric constituted by at least a glass fiber, an acid-resistant organic fiber, and a non-acid-resistant organic fiber, characterized in that the nonwoven fabric has a wettability of 20 sec/mL or less and a maximum pore size of 70 um or less.

## Description

### Technical Field

The present invention relates to a pasting paper that comes in contact with a pole plate of a lead acid battery for automobiles.

### Background Art

A lead acid battery is mainly composed of a positive electrode plate, a negative electrode plate, and a separator, and as another member, a thin paper called pasting paper (paste paper) to be used in the production of a pole plate is bonded to both surfaces of the positive electrode plate.

The role of the pasting paper is to prevent fall-off of an active material paste filled in a positive electrode lattice, to prevent pole plates from bonding to each other during aging performed after filling, to improve handleability in assembling a battery, and the like.

The pasting paper composed of a commonly used paper (pulp 100%) is needed in the production process of a lead acid battery, but becomes a hindrance as a resistive material in the charging/discharging reaction of the lead acid battery. Accordingly, it is formed from a material that dissolves in sulfuric acid, which is an electrolyte, as the lead acid battery is used, and disappears in about half a year from the start of use. Therefore, the disappearance of the pasting paper allows the charging/discharging reaction of the lead acid battery to proceed smoothly thereafter. On the other hand, as the lead acid battery continues to be used, the particle diameter of the positive electrode active material gradually increases, and the material is more likely to fall off from the pole plate lattice body. That is, it has a problem that the battery life decreases.

In order to solve the problem, a pasting paper using a glass fiber and a synthetic fiber has been proposed in recent years, and a material that does not dissolve in sulfuric acid as an electrolyte is selected.

Such a pasting paper not only has a function to improve the assembling efficiency of a lead acid battery in the early stage, but also has a function to prevent fall-off of an active material due to continuous use of the lead acid battery by remaining in sulfuric acid without dissolving even at the end of the battery life. Therefore, the pasting paper contributes to the improvement of the battery life, and thus is also used for the purpose of improving the battery performance.

The purpose of a nonwoven fabric (pasting paper) disclosed in PTL 1 is to prevent electrolyte stratification by making perforations in a polypropylene nonwoven fabric (pasting paper), allowing oxygen gas generated from a positive electrode in overcharging a lead acid battery to pass through the perforations made in the nonwoven fabric (pasting paper), and diffusing an electrolyte by gassing. However, in a recent lead acid battery for an idling stop- and-start system (ISS), the lead acid battery after discharging is used without bringing it into an overcharged state, and therefore, oxygen gas is hardly generated from the positive electrode plate. Therefore, making perforations in the nonwoven fabric (pasting paper) conversely reduces the liquid holding amount of the nonwoven fabric (pasting paper), and electrolyte stratification is more likely to occur.

A pasting paper disclosed in PTL 2 contains a glass fiber as a main component, and is composed of a fibrillated fiber and a resin, and is constituted by materials that do not disappear in sulfuric acid. However, although it is mainly composed of a glass fiber, the surface of the fiber is coated with a hydrophobic resin to maintain its strength. Therefore, the wettability of the pasting paper decreases and the affinity for the electrolyte is impaired, and thus, a sufficient liquid holding amount cannot be secured. As a result, electrolyte stratification cannot be inhibited. Further, since the internal resistance of a battery increases, it has a disadvantage that the dischargeability and charge acceptance performance decrease.

A pasting paper disclosed in PTL 3 is configured to make it difficult for basic lead sulfate to permeate even if the pasting paper is brought into a wet state by changing the constituent material of the pasting paper from a paper (pulp fiber) to a glass fiber. This is because a glass fiber is finer and denser than a paper (pulp fiber), and therefore, it is supposed that the permeation of basic lead sulfate can be prevented. However, since a nonwoven fabric composed of a dense and thick glass fiber is adopted in place of a thin paper (pulp fiber) with a large pore size, it will lead to a decrease in the capacity and deterioration in the internal resistance of a lead acid battery.

As described above, conventional techniques had several problems as follows.

Firstly, as a constituent material of a pasting paper, a paper (pulp 100%) dissolves and disappears in sulfuric acid as an electrolyte, and cannot extend the battery life.

The reason for this is that the paper (pulp 100%) dissolves and disappears in sulfuric acid as an electrolyte, and fall-off of an active material of a pole plate cannot be prevented as a battery is used.

Secondary, a nonwoven fabric of an organic fiber (synthetic fiber 100%) has poor wettability to sulfuric acid as an electrolyte, and therefore decreases the battery capacity and increases the internal resistance of a lead acid battery. In addition, it cannot inhibit electrolyte stratification.

The reason for this is that the nonwoven fabric of an organic fiber (synthetic fiber 100%) has poor wettability to sulfuric acid as an electrolyte, and does not wet evenly.

Thirdly, a nonwoven fabric made of a glass fiber has a low strength even if the fiber diameter is small, and therefore, it is difficult to form a thin nonwoven fabric, and a decrease in the battery capacity or deterioration in the internal resistance is caused.

The reason for this is that in the nonwoven fabric made of a glass fiber, the pore size is small, and transfer of electrons with a pole plate is inhibited.

Further, when a nonwoven fabric made of a fine glass fiber is used as a pasting paper, the ability to hold an electrolyte is high and electrolyte stratification can be prevented, but conversely, the internal resistance of a lead acid battery is increased, and the charge acceptability of the lead acid battery is decreased.

### Citation List

### Patent Literature

PTL 1: WO 2019/225389
PTL 2: U.S. Patent Publication No. 2019-0115579
PTL 3: JP-A-2006-302725

### Summary of Invention

### Technical Problem

An object of the present invention is to provide a pasting paper that is composed of a nonwoven fabric using at least three types of fibers as constituent materials so that, in a lead acid battery, the pasting paper has a function to prevent fall-off of an active material in assembling a battery, prevents electrolyte stratification occurring accompanying charging and discharging of the lead acid battery, and moreover inhibits a decrease in the charge acceptability of the lead acid battery by reducing the internal resistance value of the lead acid battery while maintaining prevention of fall-off of the active material and prevention of electrolyte stratification against a decrease in battery performance caused by a change in the size of the active material with repeated battery cycles.

### Solution to Problem

As a result of extensive and intensive studies for solving the above problem, the pasting paper for lead acid batteries of the present invention is a pasting paper for lead acid batteries having the following features.
(1) A pasting paper for lead acid batteries composed of a nonwoven fabric constituted by at least a glass fiber, an acid-resistant organic fiber, and a non-acid-resistant organic fiber, characterized in that the glass fiber is contained in an amount of 40 to 60% by weight, the acid-resistant organic fiber is contained in an amount of 10 to 35% by weight, and the non-acid-resistant organic fiber is contained in an amount of 15 to 40% by weight, and the nonwoven fabric has a wettability of 20 sec/mL or less and a maximum pore size of 70 um or less.
(2) The pasting paper for lead acid batteries according to the above (1), characterized in that the glass fiber has a number average fiber diameter of less than 5 um.
(3) The pasting paper for lead acid batteries according to the above (1) or (2), characterized in that the glass fiber has a number average fiber diameter of more than 1 um and less than 5 um.
(4) The pasting paper for lead acid batteries according to any one of the above (1) to (3), characterized in that the acid-resistant organic fiber is heat fusible and has a binder effect.
(5) The pasting paper for lead acid batteries according to any one of the above (1) to (4), characterized in that the non-acid-resistant organic fiber is a fiber made of a natural pulp.
(6) A lead acid battery using the pasting paper according to any one of the above (1) to (5).

### Advantageous Effects of Invention

As described above, by forming a pasting paper composed of a nonwoven fabric using at least three types of fibers as constituent materials, it has a function to prevent fall-off of an active material in assembling a lead acid battery, and can prevent electrolyte stratification occurring accompanying charging and discharging of the lead acid battery. Furthermore, against the decrease in the battery performance caused by a change in the size of the active material with repeated battery cycles, at least one or more materials that dissolve in the electrolyte (sulfuric acid) are contained as the constituent materials of the pasting paper, and therefore, the materials that dissolve in the electrolyte (sulfuric acid) are eluted into the electrolyte (sulfuric acid) from the pasting paper as the battery is used. Therefore, it is possible to provide a pasting paper in which the pore size of the pasting paper gradually increases as the battery is used, so that the internal resistance value of the lead acid battery can be reduced while maintaining prevention of fall-off of the active material and prevention of electrolyte stratification, and the decrease in the charge acceptability of the lead acid battery can be inhibited.

### Brief Description of Drawings

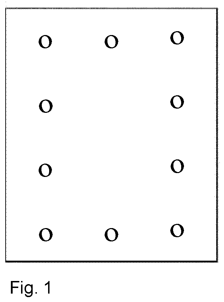

[Fig. 1] Fig. 1 is a schematic view showing a measurement point when measuring the thickness of a pasting paper produced.

### Description of Embodiments

The pasting paper for lead acid batteries of the present invention is a paper obtained by wet-papermaking using a glass fiber, an acid-resistant organic fiber, and a non-acid-resistant organic fiber as main components, and may contain, in addition to the glass fiber and the acid-resistant organic fiber, an inorganic powder such as silica, or a non-heat-fusible organic fiber such as a carbon fiber, a polyacrylonitrile fiber, or a non-heat-fusible polyester fiber, each of which is excellent in acid resistance and oxidation resistance, or the like.

In particular, in order to improve the charge acceptability of a lead acid battery, it is also preferred to add an electrically conductive material such as a carbon fiber to the pasting paper.

The acid-resistant organic fiber is preferably a fiber which is heat fusible and has a binder effect, but by blending a non-heat-fusible monofilament organic fiber together with the fiber which is heat fusible and has a binder effect, the compression breaking strength (shearing force) of the nonwoven fabric (pasting paper) can be increased (see, for example, Japanese Patent No. 4261821), which makes it possible to obtain a further superior pasting paper for lead acid batteries.

Besides, a combined effect of various combinations with a non-heat-fusible material can also be expected.

The glass fiber used for the pasting paper for lead acid batteries of the present invention is used in sulfuric acid as with a separator for lead acid batteries, and therefore is not particularly limited as long as it is an acid-resistant glass fiber, but is preferably an A glass fiber, a B glass fiber, and a C glass fiber containing an alkali metal component, and is more preferably a C glass fiber.

The fiber diameter of the glass fiber varies depending on the combined heat-fusible binder fiber or other auxiliary materials, but from the viewpoint of stratification inhibition which is the function of the pasting paper, the number average fiber diameter is preferably less than 5 um, and more preferably 4.5 µm or less. When the stratification inhibition needs to be further improved, for example, because of use in a lead acid battery for ISS, the number average fiber diameter is preferably 3 um or less.

Regarding the fiber diameter of the glass fiber, from the viewpoint of inhibition of an increase in the internal resistance of a lead acid battery or inhibition of a decrease in the charge acceptability of a lead acid battery, one having a number average fiber diameter of more than 1 um is preferred.

In the pasting paper for lead acid batteries of the present invention, the amount of the glass fiber blended is preferably 40% by weight or more.

When the amount thereof is less than 40% by weight, the wettability of the pasting paper decreases, and the ability to hold the electrolyte decreases, and therefore, sulfuric acid released from the pole plate during charging can no longer be held, causing electrolyte stratification.

The amount of the glass fiber blended is preferably 60% by weight or less.

When the amount thereof is more than 60% by weight, the tensile strength of the pasting paper decreases, and the shape retainability of the pasting paper when it is immersed in the electrolyte (sulfuric acid) decreases.

As the acid-resistant organic fiber used for the pasting paper for lead acid batteries of the present invention, a synthetic fiber (heat-fusible fiber) which is heat fusible and has a binder effect is preferred. Examples of a synthetic resin component of the synthetic fiber (heat-fusible fiber) which is heat fusible and has a binder effect include synthetic resins, for example, polyolefin resins such as a polyethylene resin and a polypropylene resin, a polystyrene resin, a polymethyl methacrylate resin, a polyacrylonitrile resin, a nylon resin, a polyester resin, and a polyfluoroethylene resin. Those to serve as heat-melting components among the above resins are polyolefin resins such as a polyethylene resin and a polypropylene resin, and a polyester resin which is heat fusible.

In the present invention, from the viewpoint of an improving effect on the tensile strength (sheet strength), a heat-fusible resin having a highly crystalline structure, for example, a polyolefin resin such as a polyethylene resin or a polypropylene resin, or a low-melting-point crystalline polyester resin is preferably used, and a polyethylene resin is more preferred.

Regarding the fiber diameter of the synthetic fiber (heat-fusible fiber) which is heat fusible and has a binder effect, since the number of synthetic fibers (heat-fusible fibers) which are heat-fusible and have a binder effect contained in the pasting paper decreases as the fiber diameter increases, a heat-fusible binder fiber having a fineness of 2.2 dtex or less is preferred from the viewpoint of tensile strength.

The fiber (heat-fusible fiber) which is heat fusible and has a binder effect used for the pasting paper for lead acid batteries of the present invention is preferably one having a core/sheath structure because of its high improving effect on the tensile strength (sheet strength).

In this case, the core may be a generally used resin such as a polyethylene resin, a polypropylene resin, or a polyester resin, but is preferably an acid-resistant one.

The sheath is preferably a crystalline heat-fusible resin, for example, a polyolefin resin such as a polyethylene resin or a polypropylene resin, a low-melting-point crystalline polyester resin, or the like.

In the pasting paper for lead acid batteries of the present invention, the amount of the acid-resistant organic fiber blended is preferably 10% by weight or more, more preferably 15% by weight or more, and still more preferably 20% by weight or more.

When the amount thereof is less than 10% by weight, the tensile strength (sheet strength) of the pasting paper for lead acid batteries is insufficient. When the amount thereof is 15% by weight or more, the shape retainability of the pasting paper for lead acid batteries becomes more favorable.

The amount of the acid-resistant organic fiber blended is preferably 35% by weight or less, and more preferably 30% by weight or less.

When the amount thereof is more than 35% by weight, the wettability decreases, and the ability to hold the electrolyte decreases, and therefore, sulfuric acid released from the pole plate during charging can no longer be held, causing electrolyte stratification.

The non-acid-resistant organic fiber used for the pasting paper for lead acid batteries of the present invention is preferably a fiber, which is a natural fiber (plant fiber) and is made of a natural pulp (natural pulp fiber), or an organic fiber that dissolves in sulfuric acid as an electrolyte such as a PVA fiber or a polylactic acid fiber, more preferably a fiber made of a natural pulp (natural pulp fiber), and still more preferably a (100% pulp) fiber made of only a natural pulp (natural pulp fiber).

The (100% pulp) fiber made of only a natural pulp (natural pulp fiber) gradually dissolves in sulfuric acid which is an electrolyte as the battery is used, but is preferred because it does not have a large adverse effect on the battery characteristics.

In the present invention, the fiber made of a natural pulp (natural pulp fiber) gradually dissolves in sulfuric acid which is an electrolyte as the battery is used, and therefore, a portion, in which the natural pulp is contained, in the pasting paper is eluted, so that the pore size of the pasting paper increases only by the eluted amount. Therefore, the internal resistance value of the lead acid battery can be reduced, and the decrease in the charge acceptability of the lead acid battery can be inhibited.

In the pasting paper for lead acid batteries of the present invention, the amount of the non-acid-resistant organic fiber blended is preferably 15% by weight or more.

When the amount thereof is less than 15% by weight, the tensile strength (sheet strength) of the pasting paper for lead acid batteries is insufficient, and also the effect of increasing the pore size of the pasting paper as the battery is used is not obtained.

The amount of the non-acid-resistant organic fiber blended is preferably 40% by weight or less.

When the amount thereof is more than 40% by weight, the wettability decreases, and the ability to hold the electrolyte decreases, and also a portion, which dissolves in the electrolyte, in the pasting paper as the battery is used becomes too large, and therefore, the shape retainability when it is immersed in the electrolyte (sulfuric acid) decreases.

In the pasting paper for lead acid batteries of the present invention, the total amount of the glass fiber, the acid-resistant organic fiber, and the non-acid-resistant organic fiber blended is preferably 60% by weight or more, more preferably 65% by weight or more, and still more preferably 70% by weight or more.

In the pasting paper for lead acid batteries of the present invention, the total amount of the acid-resistant organic fiber and the non-acid-resistant organic fiber blended is preferably 40% by weight or more, and more preferably 50% by weight or more, and is preferably 60% by weight or less.

When the amount thereof is less than 40% by weight, the tensile strength (sheet strength) of the pasting paper for lead acid batteries is insufficient, and also the shape retainability when it is immersed in the electrolyte (sulfuric acid) decreases. From the viewpoint of tensile strength, it is more desirably 50% by weight or more.

When the amount thereof is more than 60% by weight, the wettability decreases, and the ability to hold the electrolyte decreases.

In the pasting paper for lead acid batteries of the present invention, the thickness of the pasting paper is preferably 0.03 mm or more and 0.5 mm or less, more preferably 0.03 mm or more and 0.25 mm or less, and still more preferably 0.03 mm or more and 0.20 mm or less.

In order to improve the battery performance by reducing the electrical resistance compared to conventional glass pasting papers, and moreover, since there is a concern that permeation of oxygen gas generated from the positive electrode is slow, and the gas may stay inside the pasting paper and thus inhibit the battery reaction (restrict the battery reaction area), the thickness is desirably 0.03 mm or more.

On the other hand, in a general lead acid battery for automobiles, since the distance between the positive electrode and the negative electrode (pole gap) is about 1.5 mm or less, a too large thickness of the pasting paper makes it difficult to use a separator. Thus, the thickness needs to be reduced to 0.5 mm or less. In addition, since the pole gap is 1.0 mm or less in recent lead acid batteries for automobiles, the thickness of the pasting paper is desirably 0.25 mm or less. Furthermore, in a lead acid battery for automobiles for ISS, the pole gap is 0.6 mm or less, and therefore, the thickness of the pasting paper is desirably 0.20 mm or less.

As the thickness of the pasting paper is reduced, the adhesion to the pole plate is improved, but the ability to suck up the electrolyte of the pasting paper itself is weakened. However, if the wettability is 20 sec/mL or less and the maximum pore size is 70 µm or less, the active material of the pole plate itself has the electrolyte retainability and the ability to suck up the electrolyte, and therefore, the electrolyte is supplied to the pasting paper from the pole plate, and thus, the pasting paper itself does not need to have the ability to suck up the electrolyte, and priority can be given to the improvement of the adhesion to the pole plate.

In the pasting paper for lead acid batteries of the present invention, in order to use it in a general production process of a lead acid battery without any problems, the tensile strength (sheet strength) of the pasting paper is preferably 2 N/25 mm width or more, and more preferably 2.5 N/25 mm width or more.

When the tensile strength is lower than 2 N/25 mm width, a decrease in the assembly performance of a lead acid battery due to the occurrence of paper breakage or the like, deterioration in the basic physical properties during charging/discharging reaction, and a decrease in the battery life, or the like occurs.

In the pasting paper for lead acid batteries of the present invention, the maximum pore size of the pasting paper is preferably 70 um or less.

When the maximum pore size is more than 70 um, it becomes easy for the active material to pass through the pore of the pasting paper, which makes it difficult to inhibit the fall-off of the active material from the pole plate. Further, when the pore size becomes too large, the ability to hold the electrolyte of the pasting paper decreases, and electrolyte stratification cannot be inhibited.

In the pasting paper for lead acid batteries of the present invention, the maximum pore size of the pasting paper is preferably 25 um or more.

When the maximum pore size is less than 25 um, the pasting paper becomes denser, which increases the possibility of causing an increase in the internal resistance of a lead acid battery or a decrease in the charge acceptability of a lead acid battery.

In the pasting paper for lead acid batteries of the present invention, the wettability of the pasting paper is preferably 20 sec/mL or less.

When the wettability is 20 sec/mL or less, the pasting paper can be wetted by quickly and evenly distributing sulfuric acid as an electrolyte in the pasting paper.

On the other hand, when the wettability is more than 20 sec/mL, it becomes difficult to evenly distribute sulfuric acid as an electrolyte in the pasting paper, and the pole plate cannot be uniformly activated when chemical conversion is performed after assembling a lead acid battery, which causes an increase in the internal resistance.

In the pasting paper for lead acid batteries of the present invention, the glass fiber, the acid-resistant organic fiber (heat-fusible fiber), and the non-acid-resistant organic fiber (natural pulp fiber) are blended in a ratio such that the properties of each fiber can be effectively exhibited, and therefore, the maximum pore size is maintained within a range of 25 µm or more and 70 µm or less, the shape of the pasting paper can be maintained even in sulfuric acid having a specific gravity of 1.3, and the pasting paper has a tensile strength capable of being used in a general production process of a lead acid battery without any problems, and excellent wettability.

In the pasting paper for lead acid batteries of the present invention, the glass fiber and the acid-resistant organic fiber (heat-fusible fiber) that do not dissolve in sulfuric acid are responsible for the durability (battery life) in repeated charging and discharging of a lead acid battery. In addition, the acid-resistant organic fiber (heat-fusible fiber) with a large fiber diameter and the non-acid-resistant organic fiber (natural pulp fiber) can increase the pore size while maintaining the strength of the pasting paper, and therefore are responsible for the function to inhibit a decrease in the battery capacity or an increase in the internal resistance of a lead acid battery.

The pasting paper for lead acid batteries of the present invention is constituted by at least the glass fiber, the acid-resistant organic fiber (heat-fusible fiber), and the non-acid-resistant organic fiber (natural pulp fiber), and therefore, the glass fiber alone reduces the handling strength, but it is reinforced by adding the acid-resistant organic fiber (heat-fusible fiber) and the non-acid-resistant organic fiber (natural pulp fiber). On the other hand, the acid-resistant organic fiber (heat-fusible fiber) or the non-acid-resistant organic fiber (natural pulp fiber) deteriorates the wettability to the electrolyte, but it can be compensated for by adding a certain amount or more of the glass fiber.

In addition, the non-acid-resistant organic fiber (natural pulp fiber) is eluted from the inside of the pasting paper and disappears as a lead acid battery continues to be used, and thus increases the pore size of the pasting paper, reduces the internal resistance of the lead acid battery, and can also maintain the battery capacity. On the other hand, the glass fiber and the acid-resistant organic fiber (heat-fusible fiber) remain without dissolving, and therefore can maintain the shape of the pasting paper, can prevent the fall-off of the active material of the pole plate, and can also contribute to the improvement of the battery life.

### Examples

The present invention will be described more specifically below with reference to Examples and Comparative Examples, but the present invention is not to be limited to the following Examples without departing from the gist thereof.

Pasting papers for lead acid batteries of Examples 1 to 10 and Comparative Examples 1 to 7 were produced using the following raw materials.

### [Blended Raw Materials]

### (1) Glass fiber

A: CMLF114, manufactured by Nippon Sheet Glass Co., Ltd., number average fiber diameter: 3 um
B: CMLF208, manufactured by Nippon Sheet Glass Co., Ltd., number average fiber diameter: 1 um

### (2) Heat-fusible fiber (acid-resistant organic fiber)

Tepyrus TJ04EN, manufactured by Teijin Limited, 120°C thermal adhesiveness, two-component core/sheath type (core: polyethylene terephthalate, sheath: polyethylene), fineness: 1.2 dtex, number average fiber length: 5 mm

### (3) Natural pulp fiber (non-acid-resistant organic fiber)

NBKP, manufactured by Cariboo Pulp & Paper Company

### [Production of Pasting Paper]

The pasting papers for lead acid batteries of Examples 1 to 10 and Comparative Examples 1 to 7 were produced by the following procedure according to the formulation shown in Table 1.

Regarding the fiber diameter of the glass fiber, 1000 glass fibers were randomly selected from an image photograph obtained by observation with an electron microscope, and the fiber diameters thereof were measured, and a value (number average fiber diameter) obtained by averaging (number averaging) was adopted.

The raw materials (total weight: 2.0 g) were put in a container of an industrial mixer (MX-152SP, manufactured by Panasonic Corporation), and 1 L of water was added thereto, and the mixture was subjected to disaggregation and mixing for 30 seconds. A slurry-like sample liquid was put in a square sheet machine for experiments (model: No. 178, manufactured by Toyo Seiki Seisakusho Co., Ltd.), and the mixture was uniformly stirred and then formed into a sheet. The sheet was dried by heating at a temperature of 100°C for 30 minutes using a box dryer, and after standing to cool, the sheet was further heated at 150°C for 2 minutes, thereby producing a pasting paper.

### [Methods for Test and Evaluation]

For the Examples and Comparative Examples, evaluation was performed under the following conditions. The results are collectively shown in Table 1.

### (1) Weight (g/m²)

The produced pasting paper was cut into a size of 200 mm × 250 mm to form a test piece. The weight thereof was measured with an electronic balance and the weight (g/m²) was calculated.

### (2) Thickness (mm)

The produced pasting paper was cut into a size of 200 mm × 250 mm to form a test piece, and measurement was performed according to JIS P 8118.

In the measurement, a pressure of 19.6 MPa was applied to one test piece, and the thickness was measured at 10 points near the edges of the pasting paper (3 points for a short side, 4 points for a long side) as shown in Fig. 1 ("O" in Fig. 1 indicates the measurement point) using a dial thickness gauge manufactured by OZAKI MFG. Co., Ltd., and the thickness is represented by the average value at the 10 points.

### (3) Maximum pore size (µm)

The maximum pore size (µm) was measured according to a bubble point method.

A test piece was prepared by stacking several produced pasting papers so that the thickness of the stacked papers was in a range of 1.9 to 2.2 mm.

The test piece was immersed in an ethanol solution, and further, an ethanol solution was poured onto the test piece at a height of 10 mm, and pressurized air was allowed to flow from below (the surface of the pasting paper). The ventilation pressure was gradually increased, and the pressure value when bubbles (air bubbles) passed through the test piece and came out first was read from a digital manometer (mm, water column), and the maximum pore size was calculated according to the following calculation formula.

At this time, the temperature of the ethanol solution was measured, and the surface tension at that temperature was incorporated in the calculation formula. Maximum pore size (µm) = [4 × (surface tension of liquid) × 104] / [980 × {(reading from monometer, mm) - (liquid height above sample, 10 mm)}]

### (4) Tensile strength (N/25 mm width)

The produced pasting paper was cut into a size of 25 mm in width and 150 mm in length to form a test piece. The test piece was clamped with chucks at about 25 mm above and below and measurement of the strength (N) at breakage was repeated 10 times using a constant speed tensile tester (chuck-to-chuck distance: 100 mm, tensile speed: 1 mm/min). The average value was calculated and taken as the tensile strength (N/25 mm width).

### (5) Wettability (sec/mL)

The produced pasting paper was cut into a size of 40 mm × 40 mm to form a test piece. The test piece was placed on a glass plate, and 1 mL of sulfuric acid having a specific gravity of 1.3 was dropped from above. The time (sec) until the dropped sulfuric acid completely soaked into the pasting paper was defined as the wettability (sec/mL).

### (6) Shape retainability ("retaining", "soggy", "disintegrating")

The produced pasting paper was cut into a size of 40 mm × 40 mm to form a test piece. The test piece was immersed in a vertical state in sulfuric acid having a specific gravity of 1.3 while being sandwiched between two glass plates (70 mm × 70 mm). The resultant was heated to 110°C for 48 hours, and then taken out, and the condition of the pasting paper was visually checked in a state where one of the two glass plates was removed.

A case where the pasting paper maintains a quadrangular shape was evaluated as retaining shape ("retaining"). If the shape can be retained, the pasting paper is closely adhered to the surface of the pole plate, and can prevent the fall-off of the active material in the pole plate, and can contribute to the improvement of the battery life.

A case where the pasting paper is in a state where all four sides of a quadrangle have a wavy form was evaluated as soggy ("soggy"). In this case, although the shape can be retained, if the paper becomes soggy and is in a wavy state, the adhesion to the pole plate deteriorates. Although the fall-off of the active material of the pole plate can be prevented, as a lead acid battery is used for a long period of time, the edges of the pasting paper may begin to partially crumble, and it may not be able to fully contribute to the improvement of the battery life.

A case where the pasting paper cannot retain the shape and is in a state of falling apart was evaluated as disintegrating ("disintegrating"). When disintegration occurs, the fall-off of the active material in the pole plate cannot be prevented, and it cannot contribute to the improvement of the battery life.

For such pasting papers of Examples 1 to 10 and Comparative Examples 1 to 7, the respective physical properties and characteristics were measured, and the evaluation results are collectively shown in Table 1.

**[Table 1]**

| Item | Formulation (mass%) | | | | | Properties | | | | | |
|---|---|---|---|---|---|---|---|---|---|---|---|
| | Glass fiber | | Organic fiber | | | Weight (g/m²) | Thickness (mm) | Maximum pore size (µm) | Tensile strength (N/25 mm width) | Wettability (sec/mL) | Shape retainability |
| | Glass fiber A | Glass fiber 8 | Heat-fusible fiber | Natural pulp fiber | Total | | | | | | |
| Example 1 | 50 | - | 30 | 20 | 50 | 28 | 0.14 | 51 | 2.97 | 16 | retaining |
| Example 2 | 60 | - | 20 | 20 | 40 | 28 | 0.14 | 38 | 2.13 | 20 | retaining |
| Example 3 | 50 | - | 20 | 30 | 50 | 29 | 0.14 | 42 | 3.78 | 15 | retaining |
| Example 4 | 60 | - | 10 | 30 | 40 | 29 | 0.14 | 37 | 2.29 | 10 | soggy |
| Example 5 | 40 | - | 30 | 30 | 60 | 29 | 0.14 | 53 | 4.78 | 19 | retaining |
| Example 6 | 40 | - | 20 | 40 | 60 | 29 | 0.13 | 48 | 5.11 | 18 | retaining |
| Example 7 | 50 | - | 10 | 40 | 50 | 29 | 0.13 | 36 | 3.76 | 13 | soggy |
| Example 8 | 60 | - | 25 | 15 | 40 | 28 | 0.14 | 40 | 2.29 | 17 | retaining |
| Example 9 | 50 | - | 35 | 15 | 50 | 28 | 0.14 | 53 | 2.60 | 20 | retaining |
| Example 10 | 40 | - | 35 | 25 | 60 | 28 | 0.14 | 55 | 4.55 | 19 | retaining |
| Comparative Example 1 | 60 | - | 40 | - | 40 | 27 | 0.14 | 54 | 0.96 | 9 | retaining |
| Comparative Example 2 | - | - | 40 | 60 | 100 | 31 | 0.14 | 81 | 12.30 | 29 | soggy |
| Comparative Example 3 | 60 | - | - | 40 | 40 | 31 | 0.12 | 31 | 2.78 | 12 | disintegrating |
| Comparative Example 4 | 65 | - | 10 | 25 | 35 | 28 | 0.12 | 36 | 1.12 | 11 | soggy |
| Comparative Example 5 | 35 | - | 30 | 35 | 65 | 28 | 0.13 | 55 | 3.44 | 27 | retaining |
| Comparative Example 6 | 40 | - | 10 | 50 | 60 | 30 | 0.12 | 43 | 4.93 | 16 | disintegrating |
| Comparative Example 7 | - | 80 | 20 | - | 20 | 27 | 0.13 | 17 | 2.73 | 22 | retaining |

As can be seen in the test results of Examples 1 to 10 and Comparative Examples 1 to 7 shown in Table 1, it is found that the pasting paper for lead acid batteries composed of a nonwoven fabric constituted by a glass fiber, an acid-resistant organic fiber (heat-fusible fiber), and a non-acid-resistant organic fiber (natural pulp fiber) shown in Examples has a moderate maximum pore size and an excellent tensile strength, and also has favorable characteristics in terms of all wettability and shape retainability in an electrolyte (sulfuric acid), and can contribute to the reduction in the internal resistance of a lead acid battery, the improvement of the battery capacity, and also the improvement of the battery life.

### Industrial Applicability

The pasting paper for lead acid batteries of the present invention has an excellent tensile strength and also can contribute to the reduction in the internal resistance of a lead acid battery, improvement of the battery capacity, and also improvement of the battery life while maintaining prevention of fall-off of the active material and prevention of electrolyte stratification, and therefore, a lead acid battery having a large battery capacity and a long life can be provided.

## Claims

1. A pasting paper for lead acid batteries, comprising a nonwoven fabric constituted by at least a glass fiber, an acid-resistant organic fiber, and a non-acid-resistant organic fiber, **characterized in that** the glass fiber is contained in an amount of 40 to 60% by weight, the acid-resistant organic fiber is contained in an amount of 10 to 35% by weight, and the non-acid-resistant organic fiber is contained in an amount of 15 to 40% by weight, and the nonwoven fabric has a wettability of 20 sec/mL or less and a maximum pore size of 70 um or less.

2. The pasting paper for lead acid batteries according to claim 1, **characterized in that** the glass fiber has a number average fiber diameter of less than 5 um.

3. The pasting paper for lead acid batteries according to claim 1 or 2, **characterized in that** the glass fiber has a number average fiber diameter of more than 1 um and less than 5 um.

4. The pasting paper for lead acid batteries according to any one of claims 1 to 3, **characterized in that** the acid-resistant organic fiber is heat fusible and has a binder effect.

5. The pasting paper for lead acid batteries according to any one of claims 1 to 4, **characterized in that** the non-acid-resistant organic fiber is a fiber made of a natural pulp.

6. A lead acid battery comprising the pasting paper according to any one of claims 1 to 5.
